# FASCICULE DE BREVET EUROPEEN

(11) **EP 4 037 456 B1**
(45) Date de publication et mention de la délivrance du brevet: **06.12.2023**
(21) Numéro de dépôt: 20785975.2
(22) Date de dépôt: 02.10.2020
(51) Int. Cl.: A01B 21/08, A01B 23/04, A01B 49/02, A01B 49/06, A01B 63/24, A01B 71/02, A01C 5/06, A01B 25/00, A01C 7/20, A01B 63/00, A01B 63/22, A01B 63/26, A01B 63/32

(54) **MACHINE DE TRAVAIL DU SOL**
BODENARBEITSMASCHINE
SOIL-WORKING MACHINE

(30) Priorité: 02.10.2019 FR 1910925; 02.10.2019 FR 1910924; 02.10.2019 FR 1910926
(43) Date de publication de la demande: 10.08.2022
(73) Titulaire: Agrowin International, 44850 Ligne (FR)
(72) Inventeur: EVIN, florence, 44850 LIGNE (FR); EVIN, Michel, 44850 LIGNE (FR)
(74) Mandataire: Jacobacci Coralis Harle
(86) Numéro de dépôt international: PCT/EP2020/077665
(87) Numéro de publication internationale: WO 2021/064177

(56) Documents cités:
- EP-A1- 0 521 845
- EP-A1- 2 965 599
- WO-A1-2004/004438
- DE-U1-202014 103 035
- GB-A- 191 205 558
- US-A- 3 618 674
- US-A- 4 539 921

## Description

### Domaine technique de l'invention

L'invention concerne une machine de travail du sol.

Elle concerne plus particulièrement une machine de travail du sol comprenant un châssis équipé à l'avant, d'un attelage, et à l'arrière, d'un organe de contrôle du niveau du châssis par rapport au sol, cet organe dit de référence en appui au sol étant un organe de préférence rotatif, ladite machine de travail du sol comprenant également montés sur ledit châssis des rangées de disques s'étendant chacune suivant une direction transversale à la direction d'avancement du châssis,
chaque rangée de disques comprenant une poutre dite transversale s'étendant suivant une direction transversale à la direction d'avancement du châssis et des disques, les disques étant, seul ou par groupe d'au moins trois disques, montés sur la poutre oscillants par rapport à la poutre pour permettre un escamotage indépendant de chaque disque ou groupe de disques, chaque disque étant un disque creux dont la cavité est ménagée côté face dite avant du disque opposée à son dos.

### Etat de la technique

Une telle machine de travail du sol est connue comme l'illustre par exemple le brevet FR2851122. De telles machines ne doivent pas être confondues avec des machines « covercrop » où les disques sont montés sur un axe commun de manière solidaire en rotation dudit axe et forment des groupes de disques de plus de six disques comme l'illustre par exemple le document GB191205598. Les machines connues possèdent au plus deux rangées de disques comme l'illustre le document EP-2.965.599. Toutefois, les machines connues ne permettent pas de travailler dans des conditions optimales sur toute la largeur du châssis. Elles ne permettent pas non plus de manière aisée de travailler à des profondeurs de travail différenciées d'une rangée de disques à une autre. Enfin, elles ne permettent pas de régler de manière aisée une usure différenciée des disques d'une rangée de disques à une autre.

Par ailleurs les documents EP0521845A1, US4539921A et GB05558A décrivent des machines de travail du sol connues.

### Présentation de l'invention

Un but de l'invention est de proposer une machine de travail du sol perfectionnée dont la conception permet un réglage fin et précis de la profondeur de travail sans nuire à la simplicité de l'ensemble.

Un autre but de l'invention est de proposer une machine de travail du sol perfectionnée dont la conception permet de prendre en considération de manière simple l'usure différenciée des disques d'une rangée de disques à une autre et de travailler de manière aisée à une profondeur différenciée d'une rangée de disques à une autre.

A cet effet, l'invention a pour objet une machine de travail du sol selon la revendication indépendante 1. Il doit être noté que par direction d'avancement du châssis, on entend la direction avant/arrière du châssis, c'est-à-dire une direction suivant l'axe longitudinal du châssis. La présence d'au moins trois rangées de disques disposées l'une derrière l'autre suivant la direction d'avancement du châssis permet, pour une même bande de travail, un travail successif du sol de la bande par chaque rangée de disques au cours de l'avancement du châssis de sorte que le sol de ladite bande est travaillé successivement au moins trois fois en un seul passage de la machine.

La réalisation d'au moins une poutre porte-disques mobile par rapport au châssis permet de multiplier le nombre de rangées de disques sans nuire à la qualité du travail du sol réalisé. La présence d'au moins une poutre porte-disques mobile permet, pour un niveau du châssis par rapport au sol maintenu constant, de tenir compte d'une usure différenciée des disques et d'ajuster la profondeur de travail des disques d'une rangée de disques par rapport à une autre de manière aisée y compris dans le cas de rangées de disques présentant des disques de même dimension. La variation de la position d'au moins l'une des poutres porte-disques par rapport au châssis, dans le sens d'un rapprochement ou d'un écartement de la poutre porte-disques du sol ou du châssis permet de faire varier à volonté la profondeur de travail des disques de la poutre porte-disques considérée. La présence d'organes avant et arrière de contrôle de la profondeur de travail permet un réglage précis de la profondeur de travail.

Selon un mode de réalisation de l'invention, la poutre porte-disques d'au moins l'une des rangées de disques est une poutre montée, par rapport au châssis, mobile axialement suivant une direction transversale à la direction d'avancement du châssis. Il en résulte à nouveau la possibilité d'effectuer un rattrapage de l'usure des disques.

Selon un mode de réalisation de l'invention, la poutre porte-disques d'au moins l'une des rangées de disques, montée mobile par rapport au châssis dans le sens d'un rapprochement ou d'un écartement de la poutre porte-disques du sol, est également une poutre montée, par rapport au châssis, mobile axialement suivant une direction transversale à la direction d'avancement du châssis. Cette disposition permet de simplifier la conception de la machine. La conception d'au moins l'une des poutres porte-disques montée par rapport au châssis, mobile axialement, c'est-à-dire longitudinalement pour pouvoir se déplacer linéairement le long de l'axe longitudinal de la poutre suivant une direction transversale à la direction d'avancement du châssis offre à nouveau la possibilité de multiplier le nombre de rangées de disques sans nuire à la précision du travail du sol.

Selon un mode de réalisation de l'invention, la machine de travail du sol est, pour chaque poutre transversale porte-disques montée, par rapport au châssis, mobile axialement suivant une direction transversale à la direction d'avancement du châssis, équipée d'un système d'entraînement en déplacement axial de ladite poutre transversale porte-disques. Ladite poutre transversale porte-disques peut ainsi être réglée en position de manière individuelle.

Selon un mode de réalisation de l'invention, la poutre transversale porte- disques d'au moins l'une des rangées de disques est, pour son montage mobile par rapport au châssis dans le sens d'un rapprochement ou d'un écartement de la poutre transversale porte-disques du sol, couplée au châssis par au moins un support pivotant, ledit support pivotant relié par une liaison à pivotement au châssis étant monté sur le châssis à pivotement autour d'un axe pivot dit horizontal s'étendant suivant une direction transversale à la direction d'avancement du châssis. La présence d'un support pivotant permet un réglage aisé en monte et baisse de la poutre transversale porte-disques.

Selon un mode de réalisation de l'invention, le support pivotant est un support monté, par rapport au châssis, mobile axialement le long de l'axe pivot autour duquel il pivote. Ainsi, à l'aide d'un même support, une poutre transversale porte-disques peut être, par rapport au châssis, à la fois réglable en monte et baisse et suivant une direction transversale à la direction d'avancement du châssis.

Selon un mode de réalisation de l'invention, le système d'entraînement en déplacement axial d'une poutre porte-disques comprend au moins un actionneur, tel qu'un vérin, interposé entre le châssis et le support pivotant de la poutre transversale porte-disques pour l'entraînement en déplacement axial du support pivotant le long de son axe pivot. Le réglage suivant la direction transversale peut ainsi s'opérer de manière simple et rapide.

Selon un mode de réalisation de l'invention, le système d'entraînement en déplacement axial de l'une des poutres transversales porte-disques est un système vis/écrou comprenant une vis formée par une tige filetée et un écrou formé par au moins un taraudage ménagé dans le support pivotant, ladite vis, vissée dans l'écrou du support pivotant, s'étendant coaxialement à l'axe pivot du support pivotant et étant couplée de manière libre en rotation au châssis pour former la liaison à pivotement du support pivotant au châssis. La simple rotation de la vis permet un réglage en position de la poutre transversale porte-disques suivant une direction transversale à la direction d'avancement.

Selon un mode de réalisation de l'invention, le support pivotant de la poutre transversale porte-disques d'au moins l'une des rangées de disques est limité en déplacement à pivotement dans le sens d'un abaissement de la poutre transversale porte-disques en direction du sol par au moins une butée. A nouveau, cette disposition permet la réalisation d'une machine de travail de conception simplifiée. La présence d'une simple butée permet un ajustement aisé de la position relative de la poutre porte-disques mobile par rapport au châssis tout en limitant les risques de déréglage.

Selon un mode de réalisation de l'invention, chaque disque présente un diamètre au moins égal à 580 mm et au moins trois des disques de chaque rangée de disques sont des disques montés indépendants en rotation des autres disques de la rangée de disques. Les disques d'un groupe de disques qui est formé d'au plus trois disques, de préférence d'au plus deux disques, peuvent tourner indépendamment des autres disques de la rangée de disques. De même, chaque disque individuel non organisé en groupe d'une rangée de disques peut tourner indépendamment des autres disques de ladite rangée de disques. Le choix de disques de grand diamètre, c'est-à-dire de diamètre supérieur à 580 mm, de préférence supérieur à 600 mm, permet de réaliser un scalpage du sol et donc de passer dans un sol non préalablement travaillé. Généralement, chaque rangée de disques comprend au moins huit disques, de préférence au moins dix disques.

Selon un mode de réalisation de l'invention, la machine de travail comprend au moins une conduite de distribution de produit, tel qu'un fertilisant ou une semence, apte à équiper au moins l'un des disques, la au moins une conduite de distribution apte à équiper un disque étant positionnée au moins partiellement au dos du disque qu'elle équipe. La présence de conduites de distribution permet la réalisation de plusieurs opérations en un seul passage de la machine. Les possibilités de réglage de la profondeur de travail offertes par la machine permettent d'optimiser la dépose desdits produits.

Selon un mode de réalisation de l'invention, le ou au moins l'un des disques, qui est un disque creux dont la cavité est ménagée côté face dite avant du disque opposée à son dos, comprend, au niveau de son dos au moins un témoin visuel d'usure. La présence d'un témoin visuel d'usure facilite les réglages à opérer sur la machine.

Selon un mode de réalisation de l'invention, le ou au moins l'un des disques qui comprend au moins un témoin visuel d'usure est porté par la ou l'une des poutres transversales montée, par rapport au châssis, mobile axialement et le système d'entraînement en déplacement axial de la poutre transversale comprend au moins un marquage visuel de positionnement de la poutre transversale porte-disques présentant au moins une caractéristique visuelle apparente en concordance avec une caractéristique visuelle apparente d'au moins une partie du témoin visuel d'usure d'au moins l'un des disques portés par ladite poutre. Il en résulte une facilité de réglage avec un risque d'erreur réduit.

Selon un mode de réalisation de l'invention, l'organe avant de contrôle de la profondeur de travail comprend une rangée de roues disposées côte à côte avec l'axe de rotation de chaque roue s'étendant transversalement à la direction d'avancement du châssis, les roues de ladite rangée sont organisées par paire, chaque paire de roues forme un tandem dans lequel chaque roue est montée à pivotement autour d'un axe dit horizontal s'étendant suivant la direction de déplacement du châssis et les tandems sont couplés par paire au châssis, la liaison de deux tandems au châssis comprenant une liaison pivot d'axe parallèle à l'axe de pivotement de chaque roue d'une paire de roues. La conception de cet organe avant de contrôle de la profondeur de travail permet audit organe de mieux épouser le profil du sol.

Selon un mode de réalisation de l'invention, ladite machine est équipée d'un tablier dont au moins une partie est formée par une pluralité d'éléments semeurs disposés côte à côté le long d'une ligne s'étendant suivant une direction transversale à la direction d'avancement du châssis. La présence d'un tablier permet d'éviter ou de limiter la formation de mottes de terre.

Selon un mode de réalisation de l'invention, la poutre transversale porte- disques d'au moins l'une des rangées de disques est, pour son montage mobile par rapport au châssis dans le sens d'un rapprochement ou d'un écartement de la poutre transversale porte-disques du sol, couplée au châssis par au moins un parallélogramme déformable formé d'au moins deux bielles disposées chacune entre le châssis et la poutre transversale porte-disques, chaque bielle étant articulée à l'une de ses extrémités au châssis et à son autre extrémité à la poutre porte-disques, les liaisons châssis/bielle et poutre transversale porte-disques/bielle étant des liaisons pivot d'axe pivot dit horizontal s'étendant suivant une direction transversale à la direction d'avancement du châssis. Dans ce mode de réalisation, la machine de travail du sol comprend généralement, pour la commande en déformation du ou des parallélogrammes déformables, au moins un actionneur, tel qu'un vérin, s'étendant entre le châssis et l'ensemble formé par la poutre porte-disques et ses bielles de liaison au châssis.

### Description détaillée de l'invention

L'invention sera bien comprise à la lecture de la description suivante d'exemples de réalisation, en référence aux dessins annexés dans lesquels :
[Fig. 1] représente une vue en perspective d'une machine de travail du sol conforme à l'invention ;

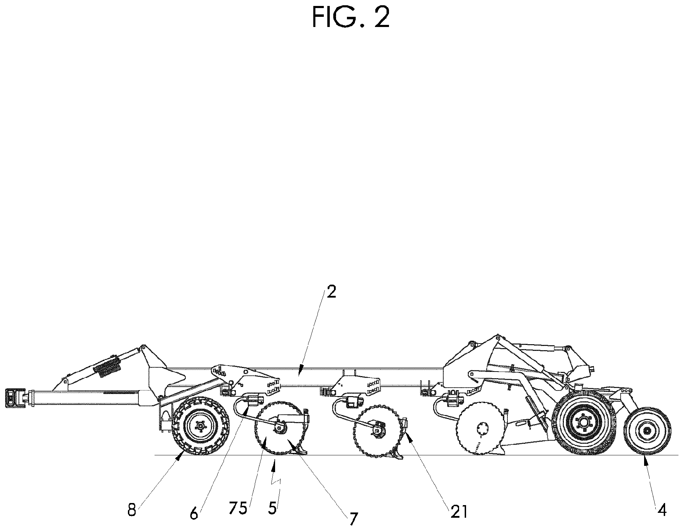

[Fig. 2] représente une vue de côté d'une machine de travail du sol conforme à l'invention ;
[Fig. 3] représente une vue partielle en perspective de la liaison d'une poutre porte-disques au châssis ;
[Fig. 4] représente une vue partielle partiellement en coupe de la liaison d'une poutre porte-disques au châssis ;
[Fig. 5] représente une vue de détail au moins partiellement en coupe de la liaison d'une poutre porte-disques au châssis ;
[Fig. 6] représente une vue partielle de la liaison d'une poutre porte-disques au châssis prise au niveau du système d'entraînement en déplacement axial de la poutre transversale porte-disques ;
[Fig. 7] représente une vue partielle partiellement en coupe d'une rangée de disques prise depuis l'avant de ladite rangée de disques ;
[Fig. 8] représente une vue de côté d'un disque et de la liaison de la poutre transversale support du disque au châssis via un support pivotant ;
[Fig. 9] représente une vue partielle en coupe de la liaison d'une poutre porte-disques au châssis pour un réglage en monte et baisse de la poutre ;
[Fig. 10] représente une vue partielle partiellement en coupe de la liaison d'une poutre porte-disques au châssis pour un réglage en monte et baisse de la poutre ;
[Fig. 11] représente une vue de détail pour un déplacement axial d'une poutre transversale porte-disques ;
[Fig. 12] représente deux vues l'une, prise côté face avant, l'autre, prise côté dos, d'un disque conforme à l'invention ;

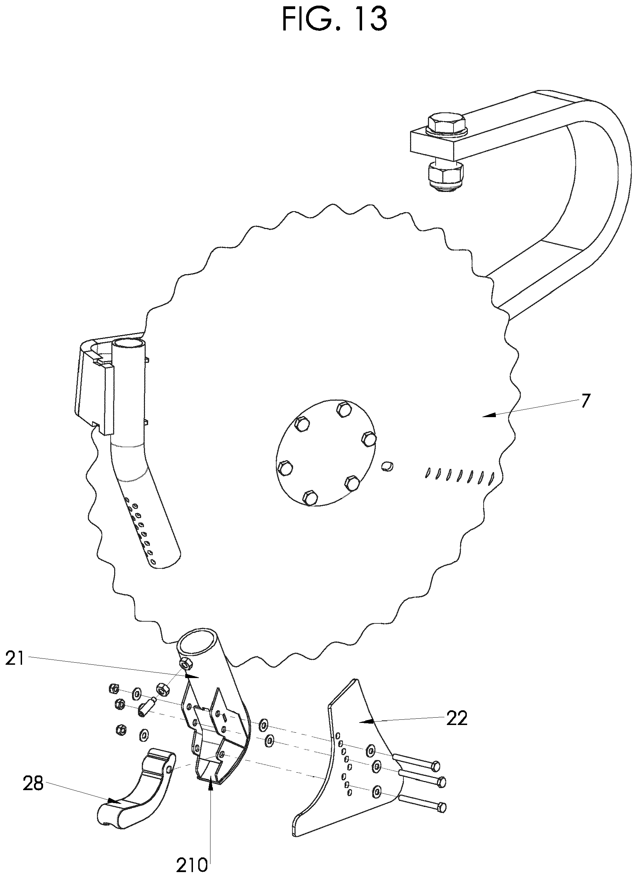

[Fig. 13] représente une vue en perspective d'un disque en position éclatée des éléments le constituant, le déflecteur, non rotatif, étant réalisé sous forme d'une pièce rapportée ;
[Fig. 14] représente une vue prise depuis l'avant de la machine de l'organe avant de contrôle de la profondeur de travail ;
[Fig. 15] illustre un exemple de travail du sol obtenu à l'aide d'une machine de travail du sol conforme à l'invention ;
[Fig. 16] illustre une vue de côté d'un disque conforme à l'invention.

La machine 1 de travail du sol, objet de l'invention, comprend un châssis 2 tracté muni d'un attelage 3 pour un attelage dudit châssis 2 à un véhicule tracteur non représenté. Ce châssis 2 peut affecter un grand nombre de formes. Il comprend généralement, comme représenté, des longerons et des traverses reliant entre eux lesdits longerons, lesdites traverses s'étendant suivant une direction transversale à la direction D d'avancement du châssis 2.

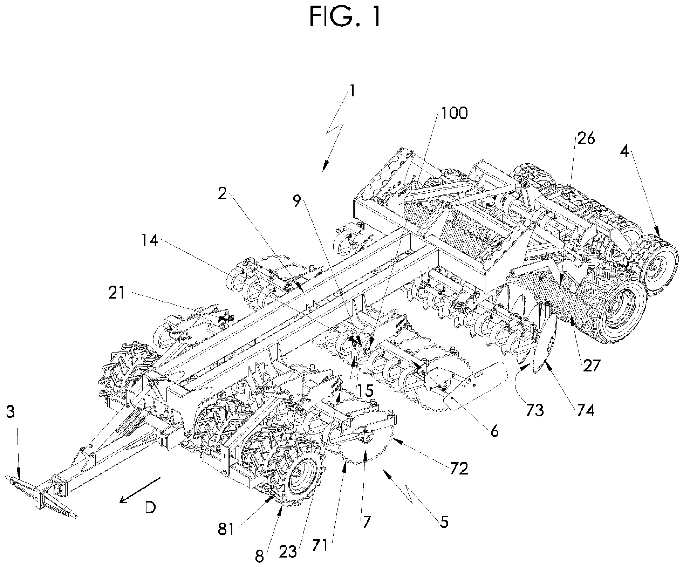

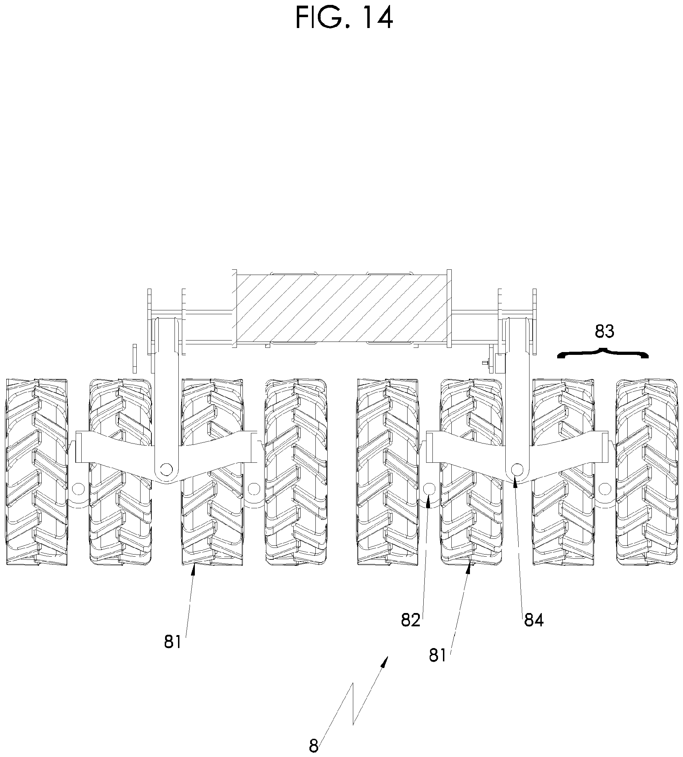

Le châssis 2 de la machine 1 de travail comprend encore plusieurs organes de contrôle de la profondeur de travail des disques configurés pour venir en appui au sol. Ainsi, la machine 1 de travail représentée à la figure 1 comprend deux organes de contrôle de la profondeur de travail représentés en 4 et 8. L'un de ces organes, dit arrière, de contrôle de la profondeur de travail, représenté en 4 aux figures, est disposé à l'arrière du châssis 2, pris par rapport au sens d'avancement du châssis 2. Cet organe rotatif permet le contrôle du niveau du châssis 2 par rapport au sol, le contrôle du niveau s'opérant par appui au sol dudit organe 4 arrière de contrôle. Dans les exemples représentés, cet organe 4 arrière de contrôle de la profondeur de travail est un train de roues s'étendant à l'arrière du châssis 2 sur toute la largeur du châssis 2. Les roues du train de roues peuvent être reliées au châssis 2 par des moyens de liaison permettant un escamotage indépendant de chaque roue ou groupe de roues dans le sens d'un effacement ou dégagement vertical de la roue ou du groupe de roues lors de la rencontre des roues avec un obstacle de manière à maintenir autant que possible un appui au sol d'au moins certaines roues du train de roues y compris lors de la rencontre avec un obstacle. Dans l'exemple représenté à la figure 1, ce train de roues est relié par l'intermédiaire de bras au châssis 2. Ces bras sont des bras pivotants articulés audit châssis 2 pour permettre un déplacement relatif entre train de roues et châssis porte-disques de manière à permettre un ajustement en position, en particulier en monte et baisse du train de roues par rapport au châssis porteur de rangées de disques, de manière à faire varier à volonté le niveau par rapport au sol du châssis 2 et par suite la profondeur de travail des disques qui seront décrits ci-après. Dans les exemples représentés, le châssis 2 comprend un deuxième organe de contrôle de profondeur de travail dit organe avant de contrôle de profondeur et représenté en 8 aux figures. Cet organe 8 avant de contrôle de profondeur positionnable en contact d'appui avec le sol est situé à l'avant du châssis 2. A nouveau, cet organe 8 de contrôle du niveau du châssis par rapport au sol peut affecter un grand nombre de formes. Dans l'exemple représenté à la figure 14, l'organe 8 avant de contrôle de la profondeur de travail comprend une rangée de roues 81 disposées côte à côte avec l'axe de rotation de chaque roue 81 s'étendant transversalement à la direction d'avancement du châssis 2. Ces roues 81 de ladite rangée sont organisées par paire. Chaque paire de roues 81 forme un tandem 83 dans lequel chaque roue 81 est montée à pivotement autour d'un axe 82 dit horizontal s'étendant suivant la direction D de déplacement du châssis. Les tandems 83 sont couplés par paire au châssis 2. La liaison 84 de deux tandems 83 au châssis 2 comprend une liaison pivot d'axe parallèle à l'axe de pivotement de chaque roue 81 d'une paire de roues 81. Cette liaison 84 de deux tandems 83 au châssis comprend en sus de la liaison pivot d'axe parallèle à l'axe de pivotement de chaque roue 81 d'une paire de roues 81, un bras pivotant portant ladite liaison pivot. Ce bras pivotant est couplé à pivotement au châssis 2 et pivote autour d'un axe transversal à la direction D de déplacement du châssis 2. Dans le cas d'un châssis 2 tracté, le niveau du châssis 2 par rapport au sol est donc défini au moins à l'aide des organes 4 arrière et 8 avant de contrôle de la profondeur de travail.

La machine 1 de travail du sol comprend encore, montées sur le châssis 2, des rangées 5 de disques 7 rotatifs non moteurs, c'est-à-dire aptes à tourner sur eux-mêmes, par simple contact avec le sol à l'état entraîné en déplacement du châssis 2. Ces disques 7 sont organisés en au moins trois rangées de disques s'étendant chacune suivant une direction transversale à la direction D d'avancement du châssis 2 et l'une derrière l'autre pris par rapport à la direction D d'avancement du châssis 2 pour permettre un travail successif du sol par chaque rangée de disques. Ainsi, dans l'exemple représenté à la figure 1, la machine 1 de travail du sol comprend trois rangées de disques 7 s'étendant chacune suivant une direction transversale à la direction D d'avancement du châssis 2, à savoir une rangée de disques avant, une rangée de disques arrière, et une rangée de disques intermédiaire. Chaque rangée 5 de disques 7 comprend une poutre 6, dite transversale, s'étendant suivant une direction transversale à la direction d'avancement du châssis 2 et des disques 7 portés par ladite poutre 6 dite porte-disques. Les disques 7 sont seuls ou par groupe montés sur la poutre 6 oscillants par rapport à la poutre 6 pour permettre un escamotage indépendant de chaque disque 7 ou groupe de disques 7 dans le sens d'un effacement ou dégagement vertical du disque ou groupe de disques lors de la rencontre des disques avec un obstacle de manière à obtenir un travail de la terre à une profondeur la plus constante possible des disques 7. Chaque groupe de disques comprend au plus trois disques 7, de préférence au plus deux disques par groupe de disques. Au moins trois, généralement au moins cinq des disques 7 d'une rangée de disques sont montés indépendants en rotation les uns par rapport aux autres. Ainsi, chaque disque peut tourner indépendamment des autres disques. En pratique, généralement, quand une rangée de disques ne comprend que des disques individuels, tous les disques de la rangée de disques sont montés libres de tourner indépendamment les uns des autres. Quand une rangée de disques comprend un ou plusieurs groupes de disques, les disques du groupe peuvent être indépendants en rotation d'un disque à l'autre du groupe ou au contraire être solidaires en rotation. Chaque rangée de disques comprend au moins huit, de préférence au moins dix, de préférence encore au moins douze disques. Dans les exemples représentés, chaque rangée de disques comprend douze disques.

Pour permettre un montage oscillant des disques 7 par rapport à la poutre 6 porte-disques en vue de permettre un escamotage indépendant de chaque disque 7 ou groupe de disques 7, chaque disque 7 ou groupe de disques 7, comme dans l'exemple de la figure 1, est relié à la poutre 6 qui le porte par l'intermédiaire d'au moins un organe de liaison. Ce ou ces organes de liaison peuvent affecter un grand nombre de formes. Dans les exemples représentés, l'organe de liaison est formé par une lame ressort en U couplée à une extrémité à une traverse du châssis et à l'autre extrémité au moyeu du disque, le U étant ouvert en direction de l'arrière du châssis 2. En variante, il aurait pu, de manière équivalente, être utilisé un bras pivotant chargé par ressort ou un ressort hélicoïdal comme décrit dans le brevet FR2851122 ou à boudins comme décrit dans le brevet EP1616467.

Chaque disque 7 d'une rangée de disques présente un bord 71 avant et un bord 72 arrière pris par rapport au sens d'avancement du châssis 2. Chaque disque 7 d'une rangée de disques présente encore un angle d'ouverture non nul. On entend par angle d'ouverture l'angle formé par une ligne tangentant le bord inférieur du disque et passant par le point le plus bas du bord du disque avec le plan vertical parallèle à la direction D d'avancement du châssis 2. Cet angle d'ouverture correspond donc à l'angle de braquage du disque par rapport à ce plan vertical. Cet angle d'ouverture est généralement compris entre 10 et 30°.

Les disques 7 peuvent encore comporter un angle d'entrure correspondant à l'angle formé par l'axe de rotation du disque avec le point d'appui au sol de la machine 1 de travail du sol. Cet angle d'entrure est généralement compris entre 5 et 18°.

Chaque disque 7 est un disque creux dont la cavité 73 est ménagée côté face 75 dite avant du disque 7 opposée à son dos 74. Un tel disque peut être un disque concave ou conique. C'est la deuxième solution qui est représentée. Dans le cas d'un tel disque 7 conique, en réalité tronconique, la génératrice du cône forme un angle, de préférence compris entre 60 et 80° avec l'axe de rotation du disque 7. Les disques présentent ici un bord ondulé et le moyeu de chaque disque 7 est couplé à la partie plane du disque formée par le sommet aplati du cône du disque réalisé en réalité sous forme tronconique. Ce couplage du moyeu au disque 7 s'opère par vissage. Chaque disque présente un diamètre au moins égal à 580 mm, de préférence au moins égal à 600 mm. Ainsi, par exemple, dans le cas d'une machine de travail du sol, telle que représentée, comprenant au moins trois rangées de disques, le diamètre des disques est au moins égal à 680 mm. Un tel diamètre des disques permet d'effectuer un travail de scalpage du sol.

Comme mentionné ci-dessus, dans les exemples représentés, le nombre de rangées 5 de disques 7 est égal à trois mais ce nombre de rangées peut être supérieur à trois.

Ainsi, dans l'exemple représenté à la figure 1, le châssis 2 de la machine 1 de travail comprend trois rangées de disques, à savoir une rangée de disques 7 avant, une rangée de disques 7 arrière et une rangée de disques 7 intermédiaire. Dans ce mode de réalisation, au moins l'une des rangées de disques 7 est réglable en hauteur par rapport au châssis 2. En l'occurrence ici, chaque rangée de disques 7 présente une poutre 6 montée mobile en position par rapport au châssis 2 pour pouvoir faire varier la profondeur de travail des disques 7 de ladite rangée de disques 7 indépendamment des autres rangées 5 de disques 7. Ainsi, pour chaque niveau du châssis 2 par rapport au sol, il est possible de faire varier la profondeur de travail des disques de chaque rangée de disques.

Chaque poutre 6 porte-disques 7 mobile est donc reliée au châssis 2 par une liaison configurée pour permettre une variation de la position de la poutre 6 porte-disques par rapport au châssis 2 dans le sens d'un rapprochement ou d'un écartement de la poutre 6 porte-disques 7 du sol ou du châssis 2 selon la référence retenue. Cette liaison peut affecter un grand nombre de formes. Deux exemples de liaison sont décrits ci-après.

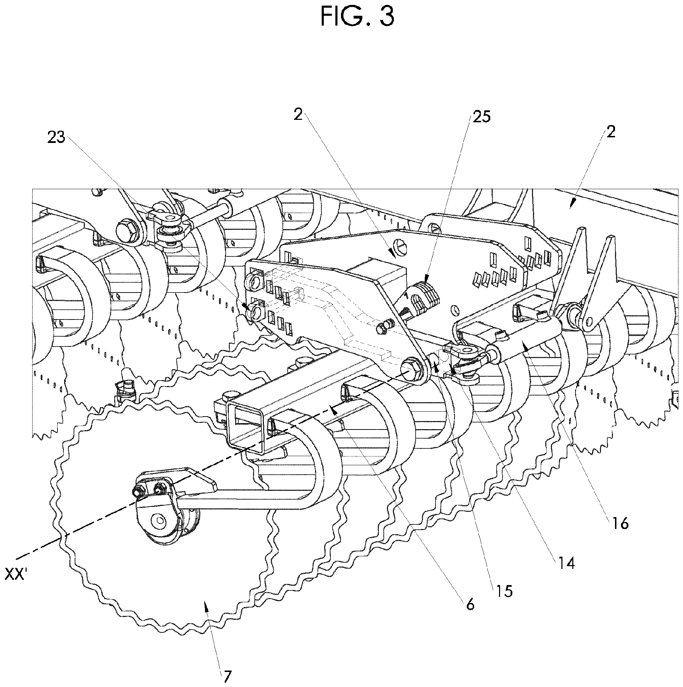

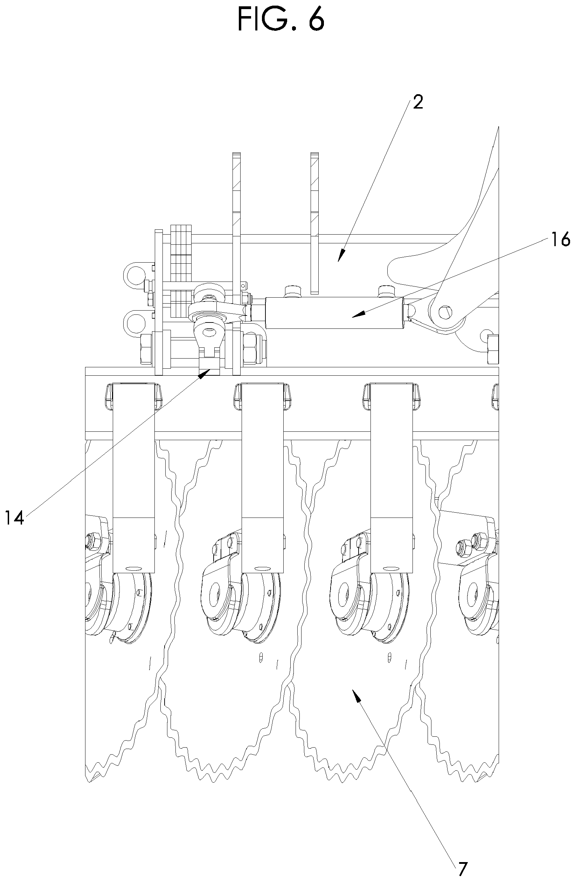

Dans l'exemple représenté, notamment aux figures 3 à 8, chaque poutre 6 transversale porte-disques 7 de chaque rangée 5 de disque 7 est, pour son montage mobile par rapport au châssis 2 dans le sens d'un rapprochement ou d'un écartement de la poutre 6 transversale porte-disques 7 du sol, couplée au châssis 2 par au moins un support 14 pivotant. Ce support 14 pivotant relié par une liaison 15 à pivotement au châssis 2 est, par l'intermédiaire de ladite liaison 15, monté sur le châssis 2 à pivotement autour d'un axe XX' pivot dit horizontal s'étendant suivant une direction transversale à la direction D d'avancement du châssis 2.

Dans les exemples représentés, ce support 14 pivotant affecte la forme d'un bras couplé d'une part, de manière fixe à la poutre 6 transversale, d'autre part, à pivotement au châssis 2. Le déplacement à pivotement du bras autour de l'axe XX' pivot dit horizontal s'étendant suivant une direction transversale à la direction D d'avancement du châssis 2 entraîne donc un déplacement en montée ou en descente de la poutre 6 porte-disques associée.

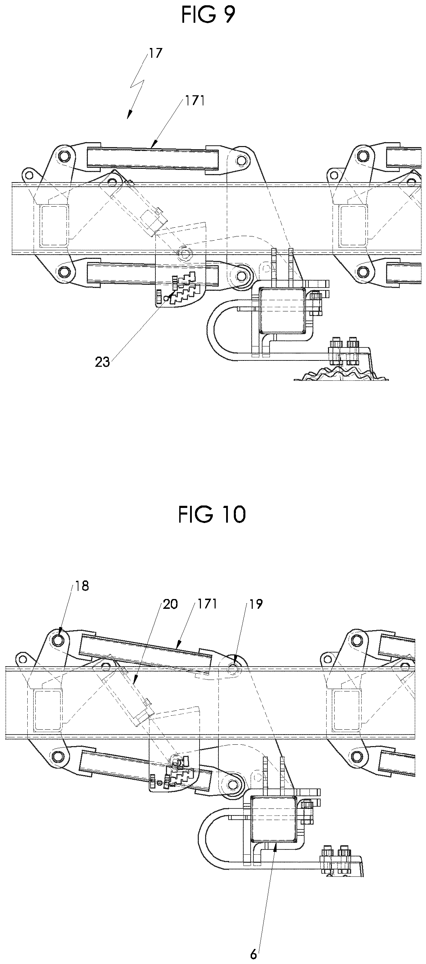

Dans l'exemple représenté aux figures 9 et 10, la liaison entre chaque poutre 6 porte-disques 7 mobile d'une rangée de disques et le châssis 2 comprend au moins un parallélogramme 17, en l'occurrence ici deux parallélogrammes 17 parallèles.

Chaque parallélogramme 17 déformable est formé de deux bielles 171 superposées, parallèles, disposée chacune entre le châssis 2 et la poutre 6 porte-disques 7.

Chaque bielle 171 est articulée à l'une de ses extrémités au châssis 2 et à son autre extrémité à la poutre 6 porte-disques 7. Les liaisons châssis 2/bielle 171 et poutre 6 porte-disques 7/bielle 171, représentées en 18 et 19 aux figures, sont des liaisons pivot d'axe pivot, dit horizontal s'étendant suivant une direction transversale à la direction D d'avancement du châssis 2.

Un actionneur 20, tel qu'un vérin, s'étend entre le châssis 2 et l'ensemble formé par la poutre 6 porte-disques 7 et ses bielles 171 de liaison au châssis 2 pour permettre une déformation du parallélogramme. Bien qu'un tel actionneur ne soit pas obligatoire, sa présence permet de faciliter l'ajustement de la profondeur de travail des disques.

En variante et de manière non représentée, la liaison entre une poutre 6 porte-disques mobile d'une rangée de disques et le châssis 2 peut être configurée pour permettre un déplacement en monte et baisse de la poutre 6 porte-disques 7 suivant une direction dite verticale orthogonale à l'axe longitudinal d'un longeron du châssis 2 à l'état positionné à l'horizontale de l'un des longerons du châssis 2.

Cette liaison peut donc comprendre un actionneur, tel qu'un vérin interposé entre le châssis 2 et la poutre 6 porte-disques 7. L'axe longitudinal de ce vérin s'étend suivant une direction dite verticale orthogonale à l'axe longitudinal de l'un des longerons 9 du châssis 2 à l'état positionné à l'horizontale de ladite poutre longitudinale du châssis 2.

Le corps du vérin est donc couplé au châssis 2 et la tige du vérin est couplée à la poutre 6 porte-disques 7. Ainsi, une extension du vérin entraîne un déplacement du vérin dans le sens d'un écartement de la poutre 6 porte-disques 7 du châssis 2, tandis qu'une rentrée de la tige du vérin entraîne un déplacement du vérin dans le sens d'un rapprochement de la poutre 6 porte-disques 7 du châssis 2.

Indépendamment de la conception de la liaison entre le châssis 2 et la poutre 6 porte-disques, une fois la position relative entre la poutre 6 porte-disques et le châssis 2 déterminée, il est préférable pour limiter les sollicitations mécaniques de la liaison de disposer de moyens de maintien qui permettent que, dans ladite position relative, tout déplacement de la poutre 6 porte-disques dans le sens d'un abaissement de la poutre 6 porte-disques en direction du sol au-delà de ladite position relative est empêché.

Ces moyens de maintien sont généralement des moyens de maintien dits temporaires activables/désactivables. Dans les exemples représentés, ces moyens de maintien comprennent au moins une butée 23 de limitation en déplacement de la poutre 6 porte-disques 7 dans le sens d'un abaissement de la poutre 6 en direction du sol.

Cette butée 23 est couplable au châssis 2 et s'étend en saillie du châssis 2 pour former une surface d'appui d'au moins une partie de l'ensemble formé par la poutre 6 porte-disques 7 et sa liaison au châssis 2.

Ainsi, dans le cas où la poutre 6 porte-disques 7 est couplée au châssis 2 par un support 14 pivotant, la butée 23 est active par contact d'appui avec ledit support 14 pivotant qui est limité en déplacement à pivotement dans le sens d'un abaissement de la poutre 6 transversale porte-disques en direction du sol par la butée 23 sur laquelle il repose.

Pour permettre de disposer de plusieurs positions relatives fonction de la profondeur de travail des disques souhaitée, ladite butée 23 est positionnable sur le châssis 2 et/ou sur l'ensemble formé par la poutre 6 porte-disques 7 et sa liaison au châssis 2 en au moins deux emplacements distincts du châssis 2 correspondant chacun à une position relative du châssis 2 et de la poutre 6 porte-disques 7, chaque position définissant un niveau de réglage de la profondeur de travail des disques 7 de la poutre 6 porte-disques 7 distinct d'une position à une autre.

Dans les exemples représentés, le châssis 2 est équipé d'une pluralité de perforations avec chaque perforation correspondant à un emplacement apte à être occupé par la butée 23 qui se présente sous forme d'une pièce qui, à l'état inséré dans une perforation, s'étend en saillie de cette perforation pour former une surface d'appui d'au moins une partie de l'ensemble constitué par la poutre 6 et sa liaison au châssis.

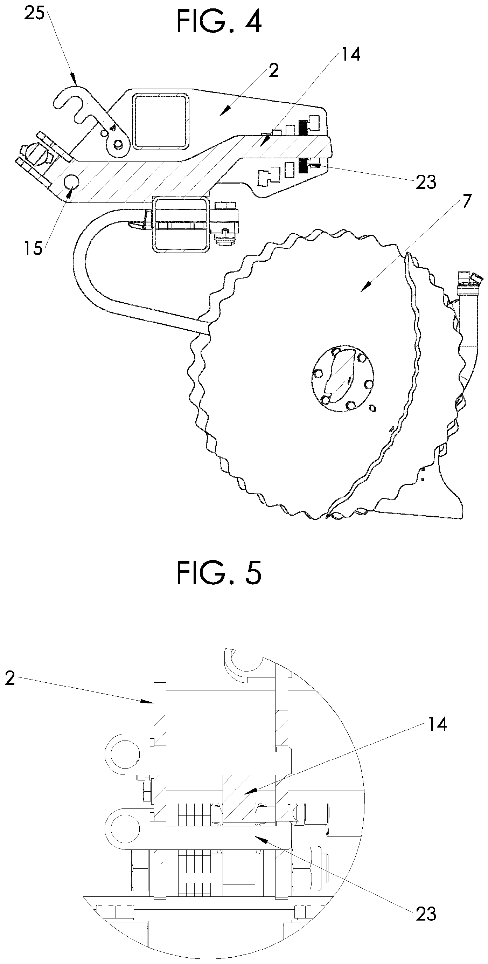

Ainsi, cette butée peut s'étendre sous la bielle inférieure, la bielle inférieure reposant sur ladite butée comme dans l'exemple représenté à la figure 9. Cette butée 23 peut encore former une surface d'appui de la poutre 6 ou du support 14 pivotant solidaire en déplacement en monte et baisse de la poutre 6 comme illustré à la figure 4.

Dans les exemples représentés, cette butée 23 est munie d'un aimant pour un maintien par aimantation à l'intérieur d'une perforation du châssis 2. Une butée dite supérieure de limitation en déplacement du support 14 pivotant dans le sens d'un soulèvement de la poutre 6 transversale porte-disques peut également être prévue.

La mise en place de ces butées 23 peut s'opérer en utilisant les organes avant et arrière de contrôle de la profondeur de travail du châssis 2.

Pour parfaire l'ensemble, il peut être prévu une possibilité de décaler au moins les disques d'une rangée de disques suivant une direction transversale à la direction d'avance du châssis pour permettre un maintien aligné des disques d'une rangée de disques à une autre.

Dans les exemples représentés, chaque poutre 6 porte-disques d'une rangée 5 de disque qui est montée mobile par rapport au châssis 2 dans le sens d'un rapprochement ou d'un écartement de la poutre 6 porte-disques 7 du sol est également une poutre 6 déplaçable axialement suivant une direction transversale à la direction D d'avancement du châssis 2 par rapport au châssis 2. A cet effet, la machine 1 de travail du sol est, pour chaque poutre 6 transversale porte-disques 7 montée mobile axialement par rapport au châssis suivant une direction transversale à la direction D d'avancement du châssis 2, équipée d'un système 9 d'entraînement en déplacement axial de ladite poutre 6 transversale porte-disques 7.

Le déplacement axial de la poutre porte-disques est un déplacement qui s'opère suivant une direction parallèle à l'axe longitudinal de la poutre. Ainsi, la poutre est soumise à un mouvement de translation le long de son axe longitudinal au cours de son déplacement axial.

A nouveau, ce système 9 d'entraînement en déplacement axial de la poutre 6 transversale porte-disques 7 peut affecter un grand nombre de formes, notamment en fonction de la conception de la liaison entre le châssis 2 et la poutre 6 porte-disques 7 pour l'entraînement en monte et baisse de ladite poutre 6 porte-disques.

Dans l'exemple représenté aux figures 3 à 8, où la poutre 6 transversale porte-disques est couplée au châssis 2 par un support 14 pivotant, ledit support 14 pivotant est en outre un support 14 déplaçable axialement le long de l'axe XX' pivot autour duquel il pivote. Ce support 14 est donc monté mobile axialement par rapport au châssis 2.

Dans un premier mode de réalisation conforme à la figure 3, le support 14 pivotant est relié à pivotement au châssis 2 par un tronçon d'arbre formant ladite liaison 15 à pivotement du support 14 pivotant au châssis 2.

Pour permettre un déplacement axial du support 14 le long de ce tronçon d'arbre, le système 9 d'entraînement en déplacement axial de la poutre 6 porte- disques comprend un vérin 16 interposé entre le châssis 2 et le support 14 pivotant. Ce vérin 16 permet d'entraîner en déplacement à coulissement le support 14 pivotant le long de l'axe pivot XX' comme illustré à la figure 3.

Pour faciliter le réglage de ce déplacement à coulissement, un marquage 25 visuel des positions du vérin 16 peut être prévu. Ce marquage 25 visuel peut affecter un grand nombre de formes.

Dans l'exemple représenté, une pluralité de butées de limitation en déplacement axial du support 14 pivotant positionnables sur la trajectoire suivie par le support 14 pivotant au cours de son déplacement axial sont prévues. Chaque butée, qui se présente sous forme d'un bras pivotant autour d'un axe parallèle à l'axe pivot XX' du support 14 pivotant, est sélectionnée par l'opérateur en fonction de la course de déplacement axial souhaitée. Pour aider à cette sélection, le ou au moins l'un des disques de la rangée de disques à déplacer comprend, au niveau de son dos 74, au moins un témoin 24 visuel d'usure.

Dans les exemples représentés, ce témoin 24 visuel d'usure est formé par une pluralité de traits parallèles disposés le long d'un rayon du disque au dos du disque. Chaque trait correspond à un diamètre du disque, ce trait pouvant être distinctif par sa couleur ou sa forme d'un trait à un autre. Ainsi, le marquage 25 visuel de positionnement de la poutre 6 transversale porte-disques du système 9 d'entraînement en déplacement axial de la poutre 6 transversale peut être en concordance avec le témoin 24 visuel d'usure d'au moins l'un des disques 7 porté par ladite poutre 6. Le marquage 25 visuel de positionnement de la poutre 6 transversale porte-disques présente donc au moins une caractéristique visuelle apparente telle que la couleur ou la forme d'au moins une partie du marquage 25 visuel en concordance avec une caractéristique visuelle apparente, telle que la couleur ou la forme d'au moins une partie du témoin 24 visuel d'usure d'au moins l'un des disques 7 porté par la poutre 6. Chaque butée de limitation en déplacement axial du support 14 pivotant constitutive du marquage 25 visuel présente donc par exemple une couleur en concordance avec un trait du témoin 24 d'usure de l'un des disques de la rangée de disques entraînés en déplacement. La butée de couleur du marquage 25 correspondant à la couleur du trait du témoin d'usure du disque est positionnée sur la trajectoire devant être suivie par le support 14 pivotant et le vérin 16 est actionné jusqu'à positionnement du support 14 pivotant contre ladite butée.

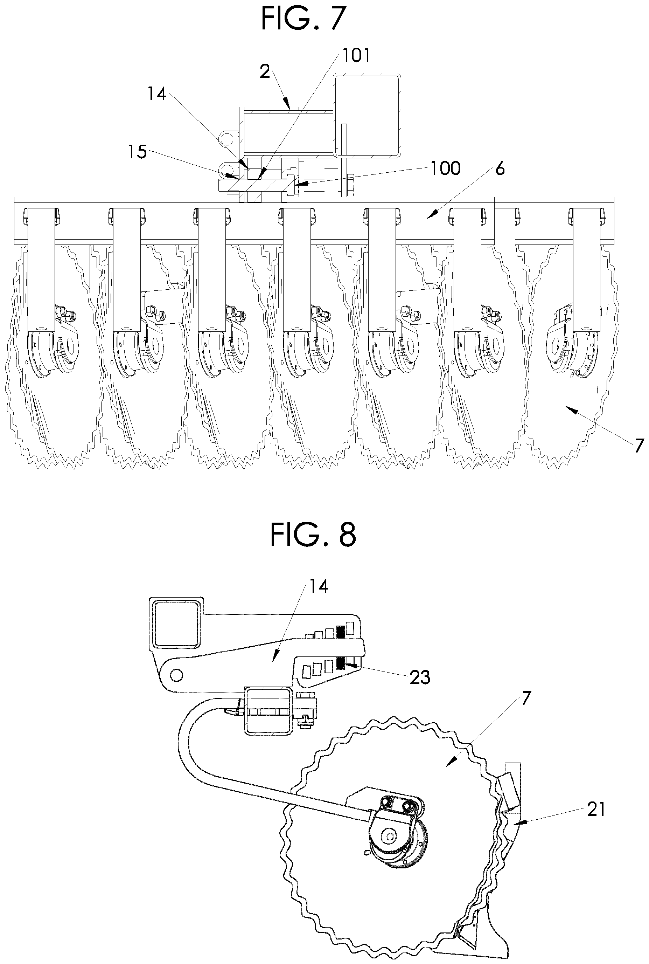

En variante et comme illustré aux figures 7 et 8, le système 9 d'entraînement en déplacement axial de l'une des poutres 6 transversales porte-disques peut être un système vis 100/écrou 101 comprenant une vis 100 formée par une tige filetée et un écrou 101 formé par au moins un taraudage ménagé dans le support 14 pivotant. Ladite vis 100 vissée dans l'écrou 101 du support 14 pivotant s'étend coaxialement à l'axe XX' pivot du support 14 pivotant et est couplée de manière libre en rotation au châssis 2 pour former la liaison 15 à pivotement du support 14 pivotant au châssis 2.

On comprend que la rotation de la vis 100 à l'intérieur du taraudage du support 14 pivotant entraîne, à l'état immobilisé en pivotement du support 14 pivotant autour de son axe XX' pivot, un déplacement axial du support 14 pivotant le long dudit axe.

Ainsi, comme l'illustrent les exemples ci-dessus, la présence d'un support 14 pivotant permet un montage en monte et baisse et un déplacement axial suivant une direction transversale de la poutre 6 porte-disques 7 par rapport au châssis 2.

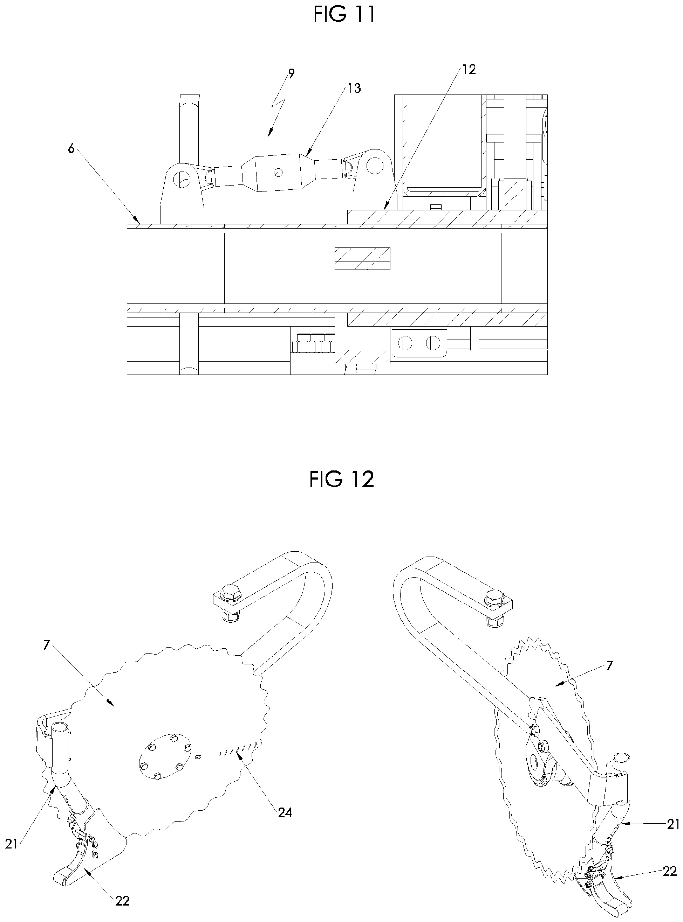

En variante, il peut être prévu un système 9 d'entraînement en déplacement axial de la poutre 6 transversale porte-disques 7 conforme à la figure 11.

A cet effet, la poutre 6 porte-disques comprend un corps de poutre, une enveloppe 12 de type fourreau à l'intérieur de laquelle le corps de poutre est apte à coulisser et un organe 13, tel qu'un vérin, d'entraînement en déplacement à coulissement du corps à l'intérieur de l'enveloppe 12. Le corps de poutre est équipé d'au moins une partie des disques 7. L'organe 13 d'entraînement en déplacement à coulissement du corps de poutre à l'intérieur de l'enveloppe 12 est disposé entre le corps et l'enveloppe 12. La liaison entre le châssis 2 et la partie 6 porte-disques 7 configurée pour permettre une variation de la position de la poutre 6 porte-disques par rapport au châssis 2 dans le sens d'un rapprochement ou d'un écartement de la poutre 6 porte-disques du sol est disposée au niveau de l'enveloppe 12 de la poutre 6.

Ainsi, indépendamment de la position relative de l'enveloppe 12 par rapport au châssis 2, le corps de poutre peut coulisser à l'intérieur de l'enveloppe 12.

Pour accroître encore la précision du travail du sol réalisé et les performances de ce travail du sol, les disques 7 peuvent être exclusivement des disques ou être équipés de conduites 21 de distribution de produit.

Ainsi, la machine 1 de travail du sol peut comprendre encore une pluralité de conduites 21 de distribution de produits, tels que des fertilisants ou des semences, aptes à équiper chacune un disque 7. Ces conduites 21 peuvent, dans certaines configurations, équiper tous les disques ou, en variante, uniquement certains de ces disques. Ces conduites 21 peuvent être disposées toutes sur une même rangée de disques ou être réparties sur différentes rangées de disques. Idéalement, la machine 1 de travail est équipée au minimum d'une conduite 21 de distribution de produits par mètre de largeur de travail du châssis 2 sur au moins une rangée de disques. Les semences ou fertilisants se déplacent à l'intérieur desdites conduites 21 sous l'effet de la gravité ou par transfert pneumatique et sont expulsées de ladite conduite 21 de distribution au niveau du débouché 210 de la conduite 21 de distribution. Pour permettre une alimentation en produits à distribuer desdites conduites 21 de distribution, au moins une zone de stockage de produit à distribuer (non représentée) est prévue. Lorsqu'un seul type de produits est distribué, la zone de stockage est unique. Cette zone de stockage peut être formée par une trémie embarquable sur le châssis 2 ou par exemple sur un accessoire attelé audit châssis. En variante, il peut être prévu plusieurs zones de stockage avec une zone de stockage d'un premier produit à distribuer et une zone de stockage d'un deuxième produit à distribuer. Indépendamment du nombre de zones de stockage, un circuit de liaison entre l'extrémité dite d'entrée de chacune des conduites et au moins une zone de stockage est prévue. Ce circuit de liaison comprend généralement la conduite 21 de distribution et une ou plusieurs conduites supplémentaires disposées entre la conduite de distribution et la ou les zones de stockage.

Généralement, une tête de répartition est disposée sur le circuit de liaison.

Comme mentionné ci-dessus, une même conduite 21 de distribution peut être alimentée par une ou plusieurs zones de stockage. Dans le cas où une même conduite 21 de distribution est alimentée par plusieurs produits, par exemple une semence et un produit phytosanitaire, une chambre de mélange peut être positionnée sur le circuit de liaison. Cette chambre comprend au moins deux entrées alimentées chacune en un produit à distribuer et une sortie apte à alimenter, via la conduite 21 de distribution, le débouché 210, c'est-à-dire l'orifice de sortie de ladite conduite 21 de distribution. Cette chambre de mélange peut être commune avec la tête de répartition ou disposée en aval de la tête de répartition pris par rapport au sens de circulation des produits à distribuer.

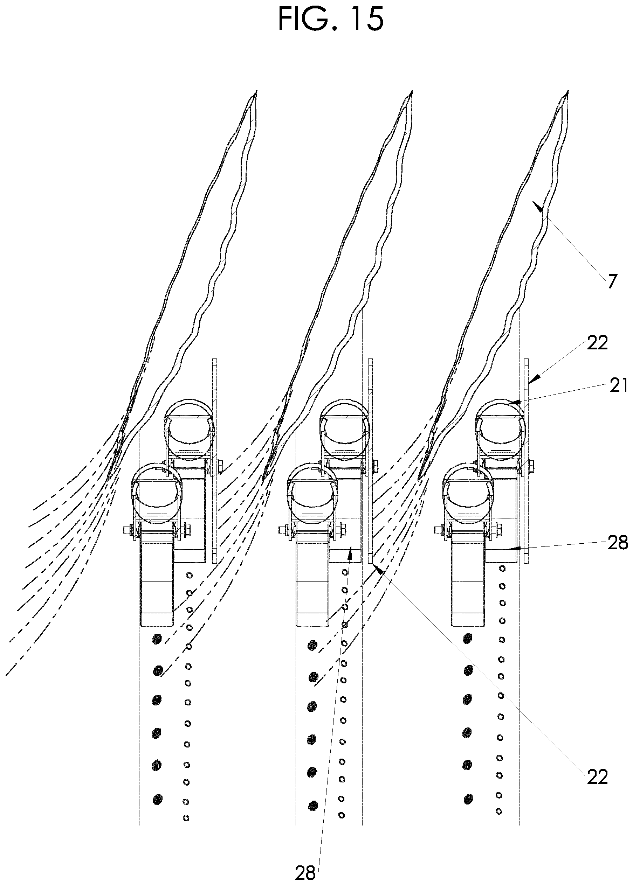

Chaque conduite 21 de distribution apte à équiper un disque 7 est positionnée au moins partiellement au dos 74 du disque 7 qu'elle équipe. Chaque disque 7 équipé d'au moins une telle conduite 21 présente généralement un diamètre supérieur à 600 mm. Un même disque 7 peut être équipé en son dos 74 d'au moins deux conduites 21 de distribution comme l'illustre la figure 15. Les conduites 21 sont généralement disposées l'une à côté de l'autre au dos 74 du disque de manière décalée ou non suivant une direction transversale à la direction D d'avancement du châssis 2. Les débouchés 210 de ces conduites 21 de distribution peuvent être positionnés au même niveau ou pas. Généralement, le débouché 210 de chaque conduite 21 de distribution qui est disposé à un niveau fonction du niveau de la zone d'appui au sol des organes 4 arrière et 8 avant de contrôle de la profondeur de travail est disposé au même niveau ou à un niveau supérieur à ces derniers.

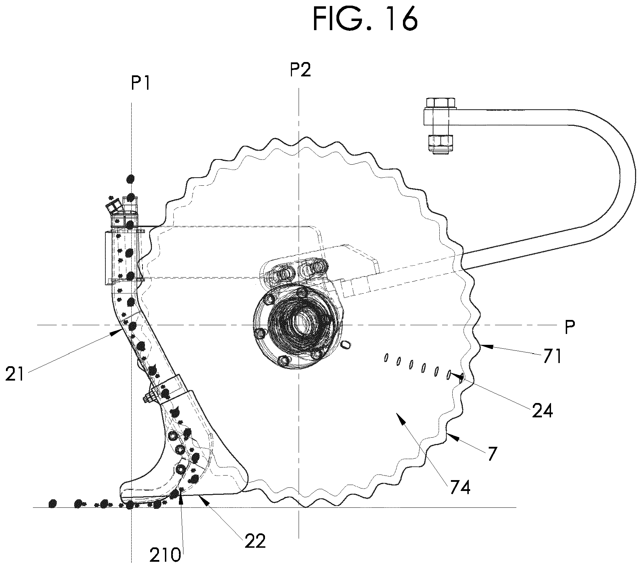

Le débouché 210 de chaque conduite 21 de distribution positionnée au moins partiellement au dos 74 d'un disque 7 est disposé côté dos du disque 7, au- dessous du plan P horizontal médian du disque 7, c'est-à-dire dans ou au niveau de la moitié inférieure du disque à l'état positionné de la machine 1 de travail sur une surface horizontale. Ce débouché 210 est par ailleurs disposé en avant, pris par rapport au sens d'avancement du châssis 2, d'un plan P1 vertical ou orthogonal à la direction D d'avancement du châssis et passant par le point le plus arrière du bord 72 arrière du disque 7 et en arrière, pris par rapport au sens d'avancement du châssis 2, d'un plan P2 vertical orthogonal à la direction D d'avancement du châssis 2 et passant par le centre de rotation du disque 7. Ces différents plans sont représentés à la figure 16 et illustrent le fait que le débouché 210 de chaque conduite 21 de distribution équipant un disque est idéalement situé côté dos du disque dans le quart inférieur arrière du disque.

Pour parfaire le positionnement au sol des produits à distribuer et en particulier éviter toute perturbation de ce positionnement, un déflecteur 22 formant écran est interposé entre ledit débouché 210 de la conduite 21 de distribution équipant le dos du disque et la face avant du disque adjacent appartenant à la même rangée de disques et disposé côté dos du disque équipé de la conduite de distribution dont le débouché est protégé par le déflecteur 22. Ainsi, comme l'illustre par exemple la figure 15, le flux de terre projeté par un disque, côté face avant dudit disque, en direction du dos du disque adjacent de la même rangée de disques, au cours de l'entraînement en rotation et de l'avance des disques de ladite rangée de disques rencontre le déflecteur 22 placé au dos du disque adjacent de sorte que le débouché de la conduite placé derrière ledit déflecteur et protégé par ledit déflecteur n'est pas atteint. Ainsi, la pose de la graine n'est pas perturbée par le flux de terre du disque adjacent. Le principe peut être le même dans le cas d'un disque équipé de deux conduites de distribution.

Ce déflecteur 22 est solidaire d'au moins une partie de la ou d'au moins l'une des conduites 21 de distribution dont il protège le débouché 210. Ce déflecteur 22 peut affecter un grand nombre de formes.

Ce déflecteur 22 peut être réalisé sous forme d'une pièce rapportée sur la conduite 21 de distribution. Dans ce cas, le déflecteur 22 est généralement fixé par vissage ou soudure à ladite conduite 21 de distribution.

En variante, le déflecteur 22 peut être réalisé d'une seule pièce avec au moins une partie de la ou d'au moins l'une des conduites 21 de distribution dont il protège le débouché 210. Dans ce cas, l'extrémité de la conduite 21 de distribution avec son débouché et le déflecteur 22 peuvent être réalisés sous forme d'une pièce moulée.

Dans l'exemple représenté, le déflecteur 22 affecte la forme d'une plaque.

Pour parfaire la précision de la dépose des produits à distribuer, le déflecteur 22 et le débouché 210 de la ou d'au moins l'une des conduites 21 de distribution, en l'occurrence ici de chacune des conduites 21 de distribution protégées par le déflecteur 22, sont réglables en hauteur par rapport au disque 7 au dos duquel la ou les conduites 21 de distribution sont positionnées.

Généralement, la conduite 21 de distribution est formée de plusieurs sections de conduite et le réglage en hauteur s'opère comme dans les exemples représentés par coulissement de la partie de la conduite 21 de distribution munie du débouché 210 par rapport à une autre section de la conduite 21 de distribution.

Des perçages sont prévus sur lesdites sections de conduite pour permettre une immobilisation des sections de conduite dans la position d'emboîtement coulissant sélectionnée. L'une des sections de conduite de la conduite 21 de distribution est reliée par une pièce de liaison de la conduite de distribution au moyeu du disque 7 qu'elle équipe.

Toujours pour parfaire la précision de la dépose des produits à distribuer, le débouché 210 de la ou d'au moins l'une des conduites 21 de distribution protégé par le déflecteur 22 est orientable par décalage angulaire. A cet effet, la section de la conduite 21 de distribution équipée du débouché 210 de la conduite 21 de distribution peut être entraînée à rotation autour d'un axe passant par l'axe longitudinal d'une portion droite de la conduite 21 de distribution.

Plusieurs séries de perçages parallèles sont prévues pour permettre une immobilisation de la section de conduite dite d'extrémité équipée du débouché de la conduite 21 de distribution dans la position d'orientation souhaitée.

Enfin, pour limiter les phénomènes de rebond lors de la dépose des produits, la ou au moins l'une des conduites 21 de distribution, de préférence, chacune des conduites 21 de distribution dont le débouché 210 est protégé par un déflecteur 22 se prolonge par une languette 28 courbe à concavité tournée vers le ciel.

Cette languette 28 s'étend au moins depuis le dessus du débouché 210 de la conduite 21 de distribution en direction du sol.

Dans les exemples représentés, cette languette 28 est solidarisable par vissage à l'extrémité de la conduite 21 de distribution.

Le fonctionnement d'une machine de travail telle que décrite ci-dessus est similaire à celui d'une machine de travail classique à l'exception du fait que d'une part, la possibilité de réglage en position des poutres 6 porte-disques par rapport au châssis 2 permet de parfaitement ajuster la profondeur de travail des disques de chaque rangée de disques tout en conservant un alignement des disques entre rangées de disques, d'autre part, le positionnement particulier du débouché des conduites de distribution permet de mieux garantir une dépose au sol du produit à distribuer avant que ce produit soit recouvert par un flux de terre latéral oblique produit par le disque adjacent au disque équipé en son dos de la conduite de distribution du produit à distribuer, ce disque adjacent présentant sa cavité en regard du dos du disque équipé de la conduite. Il doit être noté que les disques peuvent présenter une concavité inversée d'une rangée de disques à une autre. Ainsi, les disques de la première rangée de disques peuvent présenter une concavité tournée vers l'un des bords longitudinaux du châssis, par exemple le bord longitudinal de gauche, et projeter un flux de terre vers ledit bord longitudinal tandis que les disques de la rangée de disques suivante présentent une concavité tournée vers l'autre bord longitudinal du châssis, par exemple le bord longitudinal de droite et projettent un flux de terre vers ledit bord longitudinal.

Enfin, la machine 1 de travail peut être équipée d'un tablier 26 dont au moins une partie est formée par une pluralité d'éléments 27 semeurs disposés côte à côte le long d'une ligne s'étendant suivant une direction transversale à la direction D d'avancement du châssis 2.

Ce tablier 26 peut, comme dans l'exemple représenté à la figure 1, être disposé en arrière de la dernière rangée de disques ou entre deux rangées de disques.

## Revendications

1. Machine (1) de travail du sol comprenant un châssis (2) équipé à l'avant d'un attelage (3) et à l'arrière d'un organe (4) dit arrière de contrôle de la profondeur de travail, cet organe (4), dit de référence, en appui au sol, étant un organe (4) de préférence rotatif, ladite machine (1) de travail du sol comprenant également, montées sur ledit châssis (2), des rangées (5) de disques (7) s'étendant chacune suivant une direction transversale à la direction (D) d'avancement du châssis (2), chaque rangée (5) de disques (7) comprenant une poutre (6) dite transversale s'étendant suivant une direction transversale à la direction d'avancement du châssis (2) et des disques (7), les disques (7) étant, seul ou par groupe d'au plus trois disques (7), montés sur la poutre (6) oscillants par rapport à la poutre (6) pour permettre un escamotage indépendant de chaque disque (7) ou groupe de disques (7), chaque disque (7) étant un disque creux dont la cavité (73) est ménagée côté face (75) dite avant du disque (7) opposée à son dos (74), la machine (1) de travail du sol comprend, en sus de l'organe arrière (4) de contrôle de la profondeur de travail, un organe (8) avant de contrôle de la profondeur de travail disposé à l'avant du châssis (2), en avant des rangées (5) de disques (7) pris par rapport au sens d'avancement du châssis (2), cet organe (8) avant de contrôle de la profondeur de travail est positionnable en appui au sol, et le nombre de rangées (5) de disques (7) disposées l'une derrière l'autre suivant la direction (D) d'avancement du châssis (2) est au moins égal à trois,
machine **caractérisée en ce que** la poutre (6) porte-disques (7) d'au moins l'une des rangées (5) de disques (7) est une poutre (6) montée mobile par rapport au châssis (2) dans le sens d'un rapprochement ou d'un écartement de la poutre (6) porte-disques (7) du sol pour pouvoir faire varier la profondeur de travail des disques (7) de ladite rangée (5) de disques (7) indépendamment des autres rangées (5) de disques (7).

2. Machine (1) de travail du sol selon la revendication 1, **caractérisée en ce que** la poutre (6) porte-disques (7) d'au moins l'une des rangées (5) de disques (7) est une poutre montée, par rapport au châssis (2), mobile axialement suivant une direction transversale à la direction (D) d'avancement du châssis (2).

3. Machine (1) de travail du sol selon l'une des revendications 1 ou 2, **caractérisée en ce que** la poutre (6) porte-disques (7) d'au moins l'une des rangées (5) de disques (7), montée mobile par rapport au châssis (2) dans le sens d'un rapprochement ou d'un écartement de la poutre (6) porte-disques (7) du sol, est également une poutre (6) montée, par rapport au châssis (2), mobile axialement suivant une direction transversale à la direction (D) d'avancement du châssis (2).

4. Machine (1) de travail du sol selon l'une des revendications 2 ou 3, **caractérisée en ce que** la machine (1) de travail du sol est, pour chaque poutre (6) transversale porte-disques (7) montée, par rapport au châssis (2), mobile axialement suivant une direction transversale à la direction (D) d'avancement du châssis (2), équipée d'un système (9) d'entraînement en déplacement axial de ladite poutre (6) transversale porte-disques (7).

5. Machine (1) de travail du sol selon l'une des revendications 1 à 4, **caractérisée en ce que** la poutre (6) transversale porte-disques (7) d'au moins l'une des rangées (5) de disques (7) est, pour son montage mobile par rapport au châssis (2) dans le sens d'un rapprochement ou d'un écartement de la poutre (6) transversale porte-disques (7) du sol, couplée au châssis (2) par au moins un support (14) pivotant, ledit support (14) pivotant relié par une liaison (15) à pivotement au châssis (2) étant monté sur le châssis (2) à pivotement autour d'un axe (XX') pivot dit horizontal s'étendant suivant une direction transversale à la direction (D) d'avancement du châssis (2).

6. Machine (1) de travail du sol selon la revendication 5, **caractérisée en ce que** le support (14) pivotant est un support (14) monté, par rapport au châssis (2), mobile axialement le long de l'axe (XX') pivot autour duquel il pivote.

7. Machine (1) de travail du sol selon l'une des revendications 5 ou 6 prise en combinaison avec la revendication 4, **caractérisée en ce que** le système (9) d'entraînement en déplacement axial d'une poutre porte-disques comprend au moins un actionneur, tel qu'un vérin (16), interposé entre le châssis (2) et le support (14) pivotant de la poutre (6) transversale porte-disques (7) pour l'entraînement en déplacement axial du support (14) pivotant le long de son axe (XX') pivot.

8. Machine (1) de travail du sol selon l'une des revendications 5 ou 6 prise en combinaison avec la revendication 4, **caractérisée en ce que** le système (9) d'entraînement en déplacement axial de l'une des poutres (6) transversales porte-disques est un système vis (100)/écrou (101) comprenant une vis (100) formée par une tige filetée et un écrou (101) formé par au moins un taraudage ménagé dans le support (14) pivotant, la vis (100), vissée dans l'écrou (101) du support (14) pivotant, s'étendant coaxialement à l'axe (XX') pivot du support (14) pivotant et étant couplée de manière libre en rotation au châssis (2) pour former la liaison (15) à pivotement du support (14) pivotant au châssis (2).

9. Machine (1) de travail du sol selon l'une des revendications 5 à 8, **caractérisée en ce que** le support (14) pivotant de la poutre (6) transversale porte-disques (7) d'au moins l'une des rangées (5) de disques (7) est limité en déplacement à pivotement dans le sens d'un abaissement de la poutre (6) transversale porte-disques en direction du sol par au moins une butée (23).

10. [Machine (1) de travail du sol selon l'une des revendications 1 à 9, **caractérisée en ce que** chaque disque (7) présente un diamètre au moins égal à 580 mm et **en ce qu'**au moins trois des disques de chaque rangée de disques sont des disques montés indépendants en rotation des autres disques de la rangée de disques.

11. Machine (1) de travail du sol selon la revendication 10, **caractérisée en ce que** la machine (1) de travail comprend au moins une conduite (21) de distribution de produit, tel qu'un fertilisant ou une semence, apte à équiper au moins l'un des disques (7), la au moins une conduite (21) de distribution apte à équiper un disque (7) étant positionnée au moins partiellement au dos (74) du disque (7) qu'elle équipe.

12. Machine (1) de travail du sol selon la revendication 4, **caractérisée en ce que** le ou au moins l'un des disques (7), qui est un disque creux dont la cavité (73) est ménagée côté face (75) dite avant du disque (7) opposée à son dos, comprend, au niveau de son dos (74) au moins un témoin (24) visuel d'usure,
**en ce que** ledit ou au moins l'un desdits disques (7) qui comprend au moins un témoin (24) visuel d'usure est porté par la ou l'une des poutres (6) transversales montée, par rapport au châssis (2), mobile axialement,
et **en ce que** le système (9) d'entraînement en déplacement axial de la poutre (6) transversale comprend au moins un marquage (25) visuel de positionnement de la poutre (6) transversale porte-disques présentant au moins une caractéristique visuelle apparente en concordance avec une caractéristique visuelle apparente d'au moins une partie du témoin (24) visuel d'usure d'au moins l'un des disques (7) porté par ladite poutre (6).

13. Machine (1) de travail du sol selon l'une des revendications 1 à 12, **caractérisée en ce que** l'organe (8) avant de contrôle de la profondeur de travail comprend une rangée de roues (81) disposées côte à côte avec l'axe de rotation de chaque roue s'étendant transversalement à la direction (D) d'avancement du châssis (2), **en ce que** les roues (81) de ladite rangée sont organisées par paire, **en ce que** chaque paire de roues (81) forme un tandem (83) dans lequel chaque roue (81) est montée à pivotement autour d'un axe (82) dit horizontal s'étendant suivant la direction (D) de déplacement du châssis (2) et **en ce que** les tandems (83) sont couplés par paire au châssis (2), la liaison (84) de deux tandems (83) au châssis comprenant une liaison (84) pivot d'axe parallèle à l'axe (82) de pivotement de chaque roue (81) d'une paire de roues (81).

14. Machine (1) de travail du sol selon l'une des revendications 1 à 13, **caractérisé en ce que** ladite machine (1) est équipée d'un tablier (26) dont au moins une partie est formée par une pluralité d'éléments (27) semeurs disposés côte à côté le long d'une ligne s'étendant suivant une direction (D) transversale à la direction d'avancement du châssis (2).

15. Machine (1) de travail du sol selon l'une des revendications 1 à 4, **caractérisée en ce que** la poutre (6) transversale porte-disques (7) d'au moins l'une des rangées (5) de disques (7) est, pour son montage mobile par rapport au châssis (2) dans le sens d'un rapprochement ou d'un écartement de la poutre (6) transversale porte-disques (7) du sol, couplée au châssis (2) par au moins un parallélogramme (17) déformable formé d'au moins deux bielles (171) disposées chacune entre le châssis (2) et la poutre (6) transversale porte-disques (7), chaque bielle (171) étant articulée à l'une de ses extrémités au châssis (2) et à son autre extrémité à la poutre (6) porte-disques (7), les liaisons (18, 19) châssis (2)/bielle (171) et poutre (6) transversale porte-disques (7)/bielle (171) étant des liaisons (18, 19) pivot d'axe pivot dit horizontal s'étendant suivant une direction transversale à la direction D d'avancement du châssis (2).

## Patentansprüche

1. Bodenbearbeitungsmaschine (1) mit einem Chassis (2), das vorne mit einer Deichsel (3) und hinten mit einem sogenannten hinteren Organ (4) zum Steuern der Arbeitstiefe ausgestattet ist, wobei das auf den Boden aufdrückende Referenzorgan (4), als Referenzorgan bezeichnet, vorzugsweise ein sich drehendes Organ (4) ist, wobei die Bodenbearbeitungsmaschine (1) außerdem am Chassis (2) angebrachte Reihen (5) Scheiben (7) aufweist, von denen sich jede in einer zur Fortbewegungsrichtung (D) des Chassis (2) quer verlaufenden Richtung erstreckt, wobei jede Reihe (5) Scheiben (7) einen sogenannten Querträger (6) aufweist, der sich in einer zur Fortbewegungsrichtung des Chassis (2) und der Scheiben (7) quer verlaufenden Richtung erstreckt, wobei die Scheiben (7) allein oder in Gruppen von höchstens drei Scheiben (7) am Träger (6) in Bezug auf den Träger (6) hin und her schwenkend angebracht sind, um ein unabhängiges Wegschwenken jeder Scheibe (7) oder jeder Gruppe Scheiben (7) zu ermöglichen, wobei jede Scheibe (7) eine hohle Scheibe ist, deren Aushöhlung (73) auf der vom Rücken (74) der Scheibe (7) abgewandten sogenannten Vorderseite (75) derselben ausgebildet ist, wobei die Bodenbearbeitungsmaschine (1) außer dem hinteren Organ (4) zum Steuern der Arbeitstiefe ein vorderes Organ (8) zum Steuern der Arbeitstiefe aufweist, das in Bezug auf die Fortbewegungsrichtung des Chassis (2) vorne am Chassis (2) vor den Reihen (5) Scheiben (7) angeordnet ist, wobei das vordere Organ (8) zum Steuern der Arbeitstiefe mit Andruck am Boden positioniert werden kann und wobei die Anzahl der in der Fortbewegungsrichtung (D) des Chassis (2) hintereinander angeordneten Reihen (5) Scheiben (7) mindestens drei beträgt,
Maschine **dadurch gekennzeichnet, daß** der Scheiben (7) tragende Träger (6) mindestens einer der Reihen (5) Scheiben (7) ein Träger (6) ist, der in Bezug auf das Chassis (2) in der Richtung einer Annäherung oder eines Entfernens des Scheiben (7) tragenden Trägers (6) an den bzw. vom Boden bewegbar angebracht ist, um die Arbeitstiefe der Scheiben (7) der besagten Reihe (5) Scheiben (7) unabhängig von den anderen Reihen (5) Scheiben (7) verändern zu können.

2. Bodenbearbeitungsmaschine (1) gemäß Anspruch 1, **dadurch gekennzeichnet, daß** der Scheiben (7) tragende Träger (6) mindestens einer der Reihen (5) Scheiben (7) ein in Bezug auf das Chassis (2) in einer zur Fortbewegungsrichtung (D) des Chassis (2) quer verlaufenden Richtung axial beweglich angebrachter Träger ist.

3. Bodenbearbeitungsmaschine (1) gemäß einem der Ansprüche 1 oder 2, **dadurch gekennzeichnet, daß** der Scheiben (7) tragende Träger (6) mindestens einer der Reihen (5) Scheiben (7), der in Bezug auf das Chassis (2) in der Richtung einer Annäherung oder eines Entfernens des Scheiben (7) tragenden Trägers (6) an den bzw. vom Boden bewegbar angebracht ist, auch ein Träger (6) ist, der in Bezug auf das Chassis (2) in einer zur Fortbewegungsrichtung (D) des Chassis (2) quer verlaufenden Richtung axial beweglich angebracht ist.

4. Bodenbearbeitungsmaschine (1) gemäß einem der Ansprüche 2 oder 3, **dadurch gekennzeichnet, daß** die Bodenbearbeitungsmaschine (1) für jeden Scheiben (7) tragenden quer verlaufenden Träger (6), der in Bezug auf das Chassis (2) in einer zur Fortbewegungsrichtung (D) des Chassis (2) quer verlaufenden Richtung axial beweglich angebracht ist, mit einem Antriebssystem (9) für ein axiales Fortbewegen des Scheiben (7) tragenden quer verlaufenden Trägers (6) ausgestattet ist.

5. Bodenbearbeitungsmaschine (1) gemäß einem der Ansprüche 1 bis 4, **dadurch gekennzeichnet, daß** der Scheiben (7) tragende quer verlaufende Träger (6) mindestens einer der Reihen (5) Scheiben (7) für seine Montage in der Richtung einer Annäherung oder eines Entfernens des Scheiben (7) tragenden Trägers (6) an den bzw. vom Boden am Chassis (2) durch mindestens eine schwenkbare Halterung (14) angekoppelt ist, wobei die durch eine schwenkbare Verbindung (15) mit dem Chassis (2) verbundene Halterung (14) am Chassis (2) um eine sogenannte horizontale Schwenkachse (XX') schwenkbar angebracht ist, die sich in einer zur Fortbewegungsrichtung (D) des Chassis (2) quer verlaufenden Richtung erstreckt.

6. Bodenbearbeitungsmaschine (1) gemäß Anspruch 5, **dadurch gekennzeichnet, daß** die schwenkbare Halterung (14) eine Halterung (14) ist, die in Bezug auf das Chassis (2) entlang der Schwenkachse (XX`), um die sie schwenkt, axial beweglich angebracht ist.

7. Bodenbearbeitungsmaschine (1) gemäß einem der Ansprüche 5 oder 6 in Kombination mit Anspruch 4, **dadurch gekennzeichnet, daß** das Antriebssystem (9) zum axialen Fortbewegen eines Scheiben tragenden Trägers mindestens ein Betätigungsorgan, wie etwa ein Stellglied (16), aufweist, das für den axialen Fortbewegungsantrieb der schwenkbaren Halterung (14) entlang ihrer Schwenkachse (XX') zwischen dem Chassis (2) und der schwenkbaren Halterung (14) des Scheiben (7) tragenden quer verlaufenden Trägers (6) angebracht ist.

8. Bodenbearbeitungsmaschine (1) gemäß einem der Ansprüche 5 oder 6 in Kombination mit Anspruch 4, **dadurch gekennzeichnet, daß** das Antriebssystem (9) zum axialen Fortbewegen eines der Scheiben tragenden quer verlaufenden Träger (6) ein System aus Schraube (100) und Mutter (101) ist, das eine durch eine Gewindestange gebildete Schraube (100) und eine durch mindestens ein in der schwenkbaren Halterung (14) ausgebildetes Gewinde gebildete Mutter (101) aufweist, wobei sich die in die Mutter (101) der schwenkbaren Halterung (14) eingeschraubte Schraube (100) koaxial zur Schwenkachse (XX') der schwenkbaren Halterung (14) erstreckt und mit dem Chassis (2) frei drehend verbunden ist, um die Schwenkverbindung (15) der schwenkbaren Halterung (14) mit dem Chassis (2) zu bilden.

9. Bodenbearbeitungsmaschine (1) gemäß einem der Ansprüche 5 bis 8, **dadurch gekennzeichnet, daß** die schwenkbare Halterung (14) des Scheiben (7) tragenden quer verlaufenden Trägers (6) mindestens einer der Reihen (5) Scheiben (7) durch mindestens einen Anschlag (23) in der Schwenkbewegung in der Richtung eines Absenkens des Scheiben (7) tragenden quer verlaufenden Trägers (6) zum Boden hin begrenzt ist.

10. Bodenbearbeitungsmaschine (1) gemäß einem der Ansprüche 1 bis 9, **dadurch gekennzeichnet, daß** jede Scheibe (7) einen Durchmesser von mindestens 580 mm hat und daß mindestens drei der Scheiben jeder Reihe Scheiben Scheiben sind, die rotationsmäßig von den anderen Scheiben der Reihe Scheiben unabhängig montiert sind.

11. Bodenbearbeitungsmaschine (1) gemäß Anspruch 10, **dadurch gekennzeichnet, daß** die Bearbeitungsmaschine (1) mindestens eine Leitung (21) zum Verteilen von Produkten, wie zum Beispiel ein Düngemittel oder ein Saatgut, aufweist, die dazu ausgelegt ist, mindestens eine der Scheiben (7) zu bestücken, wobei die mindestens eine zum Bestücken einer Scheibe (7) ausgelegte Verteilungsleitung (21) mindestens teilweise auf dem Rücken der Scheibe (7), die sie bestückt, positioniert ist.

12. Bodenbearbeitungsmaschine (1) gemäß Anspruch 4, **dadurch gekennzeichnet, daß** die oder mindestens eine der Scheiben (7), die eine hohle Scheibe ist, deren Aushöhlung (73) auf der vom Rücken (74) der Scheibe (7) abgewandten sogenannten Vorderseite (75) derselben ausgebildet ist, an ihrem Rücken (74) mindestens eine Abnutzungssichtanzeige (24) aufweist,
daß die oder mindestens eine der Scheiben (7), die mindestens eine Abnutzungssichtanzeige (24) aufweist, von dem oder einem der in Bezug auf das Chassis (2) quer montierten Träger (6) axial beweglich getragen wird,
und daß das Antriebssystem (9) für axiales Bewegen des quer montierten Trägers (6) eine Sichtmarkierung (25) für das Positionieren des Scheiben (7) tragenden quer verlaufenden Trägers (6) aufweist, die mindestens ein sichtbares Merkmal aufweist, das mit einem sichtbaren Merkmal mindestens eines Teils der Abnutzungssichtanzeige (24) mindestens einer der vom Träger (6) getragenen Scheiben (7) übereinstimmt.

13. Bodenbearbeitungsmaschine (1) gemäß einem der Ansprüche 1 bis 12, **dadurch gekennzeichnet, daß** das vordere Organ (8) zum Steuern der Arbeitstiefe eine Reihe Räder (81) aufweist, die neben der Drehachse jedes Rads, die sich quer zur Fortbewegungsrichtung (D) des Chassis (2) erstreckt, angeordnet sind, daß die Räder (81) der besagten Reihe paarweise organisiert sind, daß jedes Paar Räder (81) ein Tandem (83) bildet, bei dem jedes Rad (81) um eine sogenannte horizontale Achse (82), die sich in der Fortbewegungsrichtung (D) des Chassis (2) erstreckt, schwenkbar angebracht ist, und daß die Tandems (83) paarweise mit dem Chassis (2) gekoppelt sind, wobei die Verbindung (84) zweier Tandems (83) zum Chassis eine Schwenkverbindung (84) mit einer zur Schwenkachse (82) jedes Rads (81) eines Paars Räder (81) parallelen Achse aufweist.

14. Bodenbearbeitungsmaschine (1) gemäß einem der Ansprüche 1 bis 13, **dadurch gekennzeichnet, daß** die Maschine (1) mit einer Stirnwand (26) ausgestattet ist, von der mindestens ein Teil durch eine Vielzahl Saatelemente (27) gebildet ist, die nebeneinander entlang einer Linie angeordnet sind, die sich in einer zur Fortbewegungsrichtung des Chassis (2) quer verlaufenden Richtung (D) erstreckt.

15. Bodenbearbeitungsmaschine (1) gemäß einem der Ansprüche 1 bis 4, **dadurch gekennzeichnet, daß** der Scheiben (7) tragende quer verlaufende Träger (6) mindestens einer der Reihen (5) Scheiben (7) für dessen mobile Montage in Bezug auf das Chassis (2) in der Richtung einer Annäherung oder eines Entfernens des Scheiben (7) tragenden Trägers (6) an den bzw. vom Boden am Chassis (2) durch mindestens ein durch mindestens zwei Kolbenstangen (171) gebildetes verformbares Parallelogramm (17) angekoppelt ist, von denen jede zwischen dem Chassis (2) und dem Scheiben (7) tragenden quer verlaufenden Träger (6) angeordnet ist, wobei jede Kolbenstange (171) an einem ihrer Enden am Chassis (2) angelenkt ist und an ihrem anderen Ende an dem Scheiben (7) tragenden quer verlaufenden Träger (6) angelenkt ist, wobei die Verbindungen (18, 19) zwischen Chassis (2) und Kolbenstage (171) und Scheiben (7) tragendem Querträger (6) und Kolbenstange (171) Schwenkverbindungen (18, 19) mit einer sogenannten horizontalen Schwenkachse sind, die sich in einer zur Fortbewegungsrichtung (D) des Chassis (2) quer verlaufenden Richtung erstrecken.

## Claims

1. A soil working machine (1) comprising a frame (2) equipped on the front with a hitch (3) and on the rear with a so-called rear working depth control member (4), this member (4), so-called reference member, resting on the ground, being a preferably rotating member (4), said soil working machine (1) also comprising, mounted on said frame (2), rows (5) of disks (7) each extending in a direction transverse to the direction (D) of travel of the frame (2), each row (5) of disks (7) comprising a beam (6), so-called transverse beam, extending in a direction transverse to the direction of travel of the chassis (2) and the disks (7), the disks (7) being, alone or in groups of up to three disks (7), mounted on the beam (6) in such a way as to swivel with respect to the beam (6) to allow an independent retraction of each disk (7) or group of disks (7), each disk (7) being a hollow disk whose cavity (73) is arranged on the so-called front side (75) of the disk (7), opposite to the back side (74) thereof,
the soil working machine (1) comprises, in addition to the rear working depth control member (4), a front working depth control member (8) arranged on the front of the frame (2), in front of the rows (5) of disks (7) considered with respect to the direction of travel of the frame (2),
this front working depth control member (8) can be positioned resting on the soil, and
the number of rows (5) of disks (7) arranged one behind the other in the direction (D) of travel of the frame (2) is at least equal to three,
machine **characterized in that** the beam (6) carrying disks (7) of at least one of the rows (5) of disks (7) is a beam (6) movably mounted with respect to the frame (2) in a direction of moving the beam (6) carrying disks (7) closer to or away from the soil, in order to be able to vary the working depth of the disks (7) of said row (5) of disks (7) independently of the other rows (5) of disks (7).

2. The soil working machine (1) according to claim 1, **characterized in that** the beam (6) carrying disks (7) of at least one of the rows (5) of disks (7) is a beam mounted, with respect to the frame (2), axially movable in a direction transverse to the direction (D) of travel of the frame (2).

3. The soil working machine (1) according to one of claims 1 or 2, **characterized in that** the beam (6) carrying disks (7) of at least one of the rows (5) of disks (7), mounted movable with respect to the frame (2), in the direction of moving the beam (6) carrying disks (7) closer to or away from the soil, is also a beam (6) mounted, with respect to the frame (2), axially movable in a direction transverse to the direction (D) of travel of the frame (2).

4. The soil working machine (1) according to one of claims 2 or 3, **characterized in that** the soil working machine (1) is, for each transverse beam (6) carrying disks (7) mounted, with respect to the frame (2), axially movable in a direction transverse to the direction (D) of travel of the frame (2), equipped with a system (9) for the axial displacement drive of said transverse beam (6) carrying disks (7).

5. The soil working machine (1) according to one of claims 1 to 4, **characterized in that** the transverse beam (6) carrying disks (7) of at least one of the rows (5) of disks (7) is, for its movable mounting with respect to the frame (2) in the direction of moving the transverse beam (6) carrying disks (7) closer to or away from the soil, coupled to the frame (2) by at least one swivel support (14), said swivel support (14), connected by a swivel connection (15) to the frame (2), being mounted on the frame (2) in such a way as to swivel about a so-called horizontal swivel axis (XX') extending in a direction transverse to the direction (D) of travel of the frame (2).

6. The soil working machine (1) according to claim 5, **characterized in that** the swivel support (14) is a support (14) mounted, with respect to the frame (2), axially movable along the swivel axis (XX') about which it swivels.

7. The soil working machine (1) according to one of claims 5 or 6, taken in combination with claim 4, **characterized in that** the system (9) for the axial displacement drive of a beam carrying disks comprises at least one actuator, such as a cylinder (16), interposed between the frame (2) and the swivel support (14) of the transverse beam (6) carrying disks (7) for the axial displacement drive of the swivel support (14) along the swivel axis (XX') thereof.

8. The soil working machine (1) according to one of claims 5 or 6, taken in combination with claim 4, **characterized in that** the system (9) for the axial displacement drive of one of the transverse beams (6) carrying disks is a screw (100)/nut (101) system comprising a screw (100) formed by a threaded rod and a nut (101) formed by at least one internal thread formed in the swivel support (14), the screw (100), screwed in the nut (101) of the swivel support (14), extending coaxially to the swivel axis (XX') of the swivel support (14) and being coupled to the frame (2) in such a way as to freely rotate, to form the swivel connection (15) of the swivel support (14) to the frame (2).

9. The soil working machine (1) according to one of claims 5 to 8, **characterized in that** the swivel support (14) of the transverse beam (6) carrying disks (7) of at least one of the rows (5) of disks (7) is limited in swivel motion in the direction of lowering the transverse beam (6) carrying disks towards the soil by at least one stop (23).

10. The soil working machine (1) according to one of claims 1 to 9, **characterized in that** each disk (7) has a diameter at least equal to 580 mm and **in that** at least three of the disks of each row of disks are disks mounted rotationally independent of the other disks of the row of disks.

11. The soil working machine (1) according to claim 10, **characterized in that** the working machine (1) comprises at least one line (21) for dispensing a product, such as a fertilizer or a seed, adapted to be fitted to at least one of the disks (7), the at least one dispensing line (21) adapted to be fitted to a disk (7) being positioned at least partially on the back side (74) of the disk (7) to which it is fitted.

12. The soil working machine (1) according to claim 4, **characterized in that** the or at least one of the disks (7), which is a hollow disk whose cavity (73) is arranged on the so-called front side (75) of the disk (7), opposite to the back side thereof, comprises, at the back side (74) thereof, at least one visual wear indicator (24),
**in that** the or at least one of the disks (7), which comprises at least one visual wear indicator (24), is carried by the or one of the transverse beams (6) mounted axially movable with respect to the frame (2),
and **in that** the system (9) for the axial displacement drive of the transverse beam (6) comprises at least one visual mark (25) for the positioning of the transverse beam (6) carrying disks, having at least one apparent visual feature matching with an apparent visual feature of at least one part of the visual wear indicator (24) of at least one of the disks (7) carried by said beam (6).

13. The soil working machine (1) according to one of claims 1 to 12, **characterized in that** the front working depth control member (8) comprises a row of wheels (81) arranged side-by-side, with the axis of rotation of each wheel extending transverse to the direction (D) of travel of the frame (2), **in that** the wheels (81) of said row are organized in pairs, **in that** each pair of wheels (81) forms a tandem (83) in which each wheel (81) is swivel-mounted about a so-called horizontal axis (82) extending in the direction (D) of travel of the frame (2) and **in that** the tandems (83) are coupled by pairs to the frame (2), the link (84) of two tandems (83) to the frame comprising a swivel link (84) of axis parallel to the swivel axis (82) of each wheel (81) of a pair of wheels (81).

14. The soil working machine (1) according to one of claims 1 to 13, **characterized in that** said machine (1) is equipped with a deck (26), at least part of which is formed by a plurality of sowing elements (27) arranged side-by-side along a line extending in a direction (D) transverse to the direction of travel of the frame (2).

15. The soil working machine (1) according to one of claims 1 to 4, **characterized in that** the transverse beam (6) carrying disks (7) of at least one of the rows (5) of disks (7) is, for its movable mounting with respect to the frame (2) in the direction of moving the transverse beam (6) carrying disks (7) closer to or away from the soil, coupled to the frame (2) by at least one deformable parallelogram (17) formed of at least two connecting rods (171) each arranged between the frame (2) and the transverse beam (6) carrying disks (7), each connecting rod (171) being articulated at one of its ends to the frame (2) and at its other end to the beam (6) carrying disks (7), the frame (2)/connecting rod (171) and transverse beam (6) carrying disks (7)/connecting rod (171) connections (18, 19) being swivel connection (18, 19) of so-called horizontal swivel axis extending in a direction transverse to the direction D of travel of the frame (2).
